# EUROPÄISCHE PATENTANMELDUNG

(11) **EP 1 441 404 A1**
(43) Veröffentlichungstag der Anmeldung: **28.07.2004**
(21) Anmeldenummer: 03029385.6
(22) Anmeldetag: 19.12.2003
(51) Int. Cl.: H01M 8/02, H01M 8/24

(54) **Laminierte Membran-Elektroden-Dichtungseinheit**

(30) Priorität: 31.12.2002 US 437553 P; 17.12.2003 US 738653
(71) Anmelder: Carl Freudenberg KG, 69469 Weinheim (DE)
(72) Erfinder: Belchuk, Mark A., Windsor Ontario N82 2K2 (CA)

(57) **Zusammenfassung**

Eine integrierte Dichtungsmanschetten-Membranelektroden-Einheit (MEA) für eine Brennstoffzelle, die eine erste Dichtungsmanschette mit einer ersten Peripherie- Oberfläche und eine MEA mit einer ersten Oberfläche enthält. Ein Teil der ersten Oberfläche wird mit der ersten Peripherie-Oberfläche dauerhaft verbunden. Alternativ kann die integrierte Dichtungsmanschetten-MEA-Einheit eine erste Dichtungsmanschette mit einer ersten Peripherie-Oberfläche und eine zweite Dichtungsmanschette mit einer zweiten Peripherie-Oberfläche enthalten. Teile der ersten und zweiten Peripherie-Oberflächen werden dauerhaft verbunden. Zwischen die erste Dichtungsmanschette und die zweite Dichtungsmanschette wird eine MEA eingefügt. Die dauerhafte Verbindung wird entweder durch Thermo-, Reib- oder Vibrationsverschweißung erzielt.

## Beschreibung

Mit diesem Patentantrag werden die Vorteile des am 31. Dezember 2002 gestellten vorläufigen US-Antrags mit der Nr. 60/437.553 beansprucht.

### ANWENDUNGSGEBIET DER ERFINDUNG

Diese Erfindung betrifft. statische Dichtungen im Allgemeinen und Dichtungsmanschetten zur Abdichtung von Brennstoffzellen-Komponenten im Besonderen.

### HINTERGRUNDINFORMATION ZUR ERFINDUNG

Bei einer Brennstoffzelle handelt es sich um einen elektrochemischen Energieumwandler, der u. a. aus zwei Elektroden besteht, die an gegenüberliegenden Oberflächen eines Elektrolyten angebracht sind. Bei einer Anwendungsform wird zwischen zwei Elektrodenschichten (manchmal auch Gasdiffusionsschichten genannt) eine ionenleitende Polymerelektrolytenmembran positioniert; mit [weiteren] Schichten von Katalysatormaterial zwischen Membran und Elektrodenschichten entsteht eine Membran-Elektroden-Einheit (MEA, Membrane Electrode Assembly). Vorgesehener Zweck der MEAs ist die Förderung einer gewünschten elektrochemischen Reaktion zwischen zwei Reaktanten. Ein Reaktant, Sauerstoff oder Luft, fließt an einer Elektrode vorbei, während Wasserstoff, der andere Reaktant, an der anderen Elektrode vorbeistreicht. Sauerstoff und Wasserstoff verbinden sich zu Wasser und produzieren dabei gleichzeitig Elektrizität und Wärme.

Eine individuelle Zelle innerhalb einer Brennstoffzellenanordnung besteht aus einer MEA, die zwischen ein Paar Trennplatten (manchmal auch Strömungsfeldplatten genannt) positioniert wird. Die Trennplatten sind in der Regel für Flüssigkeiten undurchlässig aber elektrisch leitend. In der Nachbarschaft aller Plattenoberflächen einer Elektrodenschicht werden Passagen bzw. Kanäle für Flüssigkeitsströmungen geschaffen, um den Reaktanten den Zugang zu den Elektroden sowie die Entfernung der chemischen Reaktionsprodukte zu erleichtern.

Die in solchen Brennstoffzellen vorhandenen elastischen Dichtungsmanschetten oder Dichtungen befinden sich in der Regel zwischen den Stirnplatten der MEAs und den äußeren Rändern aller Trennplatten. Außerdem wird manchmal ein Klebstoff zwischen den Dichtungsmanschetten verwendet, um die MEAs nach außen abzudichten. Da die Brennstoffzelle mit Sauerstoff und Wasserstoff arbeitet, ist es wichtig, eine Dichtung bereitzustellen, die nicht nur gut gegen Wasserstoff, Sauerstoff und Wasser abdichtet, sondern darüber hinaus diese Dichtungseigenschaften auch bei Temperaturänderungen beibehält, da beim Brennstoffzellenbetrieb Wärme entsteht. Um eine gute Abdichtung sicherzustellen, dürfen die Dichtungen nur geringe Toleranzen haben und müssen in Flucht mit den anderen Komponenten sein. Beim Zusammenbau der Zellen erweist sich insbesondere die Verwendung von Dichtungsmanschetten als problematisch, da sie flexibel sind und zum Verbiegen bzw. Verdrehen neigen. Das macht das Fluchten der Zellenkomponenten zeitaufwendig und führt zu Fehlern beim Zusammenbau. Zusammenbau und Versiegelung der Komponenten lassen sich durch Verwendung eines Klebstoffs (insbesondere eines druckempfindlichen Klebstoffs) erleichtern; es ist aber nicht immer wünschenswert, beim Zellenbau einen Klebstoff zu verwenden. Weil darauf gewartet werden muss, dass der Klebstoff aushärtet, kann sich die Zykluszeit für den Zusammenbau der Brennstoffzellen in unerwünschter Weise verlängern. Darüber hinaus muss die Dichtungsmanschette im Bereich des druckempfindlichen Klebstoffs u. U. dicker als anderweitig nötig sein, damit die richtige Haftung des Klebstoffs beim Zusammenbau sichergestellt ist.

Es ist daher wünschenswert, eine Dichtungsmanschette für eine individuelle Brennstoffzelle bereitzustellen, die sich beim Zusammenbau relativ leicht an den anderen Komponenten ausrichten und damit verbinden lässt, und mit der eine ausreichende Abdichtung der fertigen Anordnung sichergestellt werden kann.

### KURZE BESCHREIBUNG DER ERFINDUNG

In ihren verschiedenen Ausführungsformen stellt die vorliegende Erfindung eine Vorrichtung zur Verwendung in einer individuellen Zelle dar, die aus einer ersten Dichtungsmanschette einschließlich einer einem ersten äußeren Rand benachbarten ersten Oberfläche, einer zweiten Dichtungsmanschette einschließlich einer einem zweiten äußeren Rand benachbarten zweiten Oberfläche, und einer Membran besteht, wobei Letztere zwischen der ersten Dichtungsmanschette und der zweiten Dichtungsmanschette positioniert und die Membran mit der ersten Oberfläche und der zweiten Oberfläche thermoverschweißt ist.

Eine weitere Ausführungsform der vorliegenden Erfindung ist eine Vorrichtung zur Verwendung in einer individuellen Zelle mit folgenden Bestandteilen: eine erste Dichtungsmanschette einschließlich einer ersten, einem ersten äußeren Rand benachbarten Oberfläche, eine zweite Dichtungsmanschette einschließlich einer zweiten, einem zweiten äußeren Rand benachbarten Oberfläche, und einer zwischen der ersten Dichtungsmanschette und einer zweiten Dichtungsmanschette angebrachten Membran, wobei die erste Oberfläche und die zweite Oberfläche miteinander vibrationsverschweißt sind.

Eine weitere Ausführungsform der vorliegenden Erfindung ist eine Methode zum Verbinden einer ersten Dichtungsmanschette und einer zweiten Dichtungsmanschette mit einer Membran, wobei die Methode folgende Schritte umfasst: Positionierung der Membran zwischen die erste Dichtungsmanschette und die zweite Dichtungsmanschette und Vibrationsverschweißung der Membran mit einer ersten Oberfläche der ersten Dichtungsmanschette und einer zweiten Oberfläche der zweiten Dichtungsmanschette im Bereich der Membran-Peripherie.

Eine weitere Ausführungsform der vorliegenden Erfindung ist eine Methode zum Verbinden einer ersten Dichtungsmanschette und einer zweiten Dichtungsmanschette mit einer Membran, wobei die Methode folgende Schritte umfasst: Positionierung der Membran zwischen die erste Dichtungsmanschette und die zweite Dichtungsmanschette und Thermoverschweißung einer ersten Oberfläche der ersten Dichtungsmanschette mit einer zweiten Oberfläche der zweiten Dichtungsmanschette im Bereich der Membran-Peripherie.

Ein Vorteil der vorliegenden Erfindung ist der, dass durch die direkte Verschweißung der Dichtungsmanschetten die Versiegelung einer MEA in einer Zelle ohne die Verwendung eines Klebstoffes möglich ist.

Ein weiterer Vorteil der vorliegenden Erfindung besteht darin, dass das Dichtungsmaterial der laminierten Dichtungsmanschetten in der Regel an der Peripherie, wo die Dichtungsmanschetten miteinander verbunden werden, dünner sein kann. Darüber hinaus ist für die Thermo- oder Vibrationsverschweißung der Dichtungsmanschetten eine größere Dickentoleranz der Teile zulässig, als wenn eine Schicht druckempfindlichen Klebstoffs verwendet wird.

Ein weiterer Vorteil der vorliegenden Erfindung besteht in der Reduzierung der Zykluszeit für den Zellenbau, da keine Aushärtungszeit für den Klebstoff mehr benötigt wird.

Ein weiterer Vorteil der vorliegenden Erfindung besteht darin, dass mit der Eliminierung des Klebstoffs auch die Gefahr eliminiert wird, dass der Klebstoff beim Zusammenbau der Komponenten die Katalysator-beschichteten Membranen kontaminiert.

### KURZE BESCHREIBUNG DER ABBILDUNGEN

Die vorliegende Erfindung lässt sich besser anhand der ausführlichen Beschreibung und der zugehörigen Abbildungen verstehen, wobei:

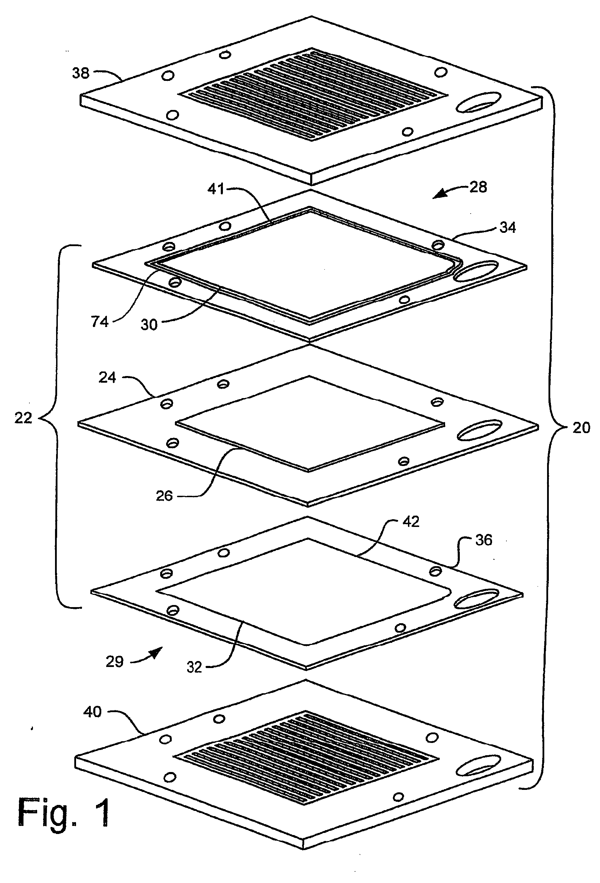

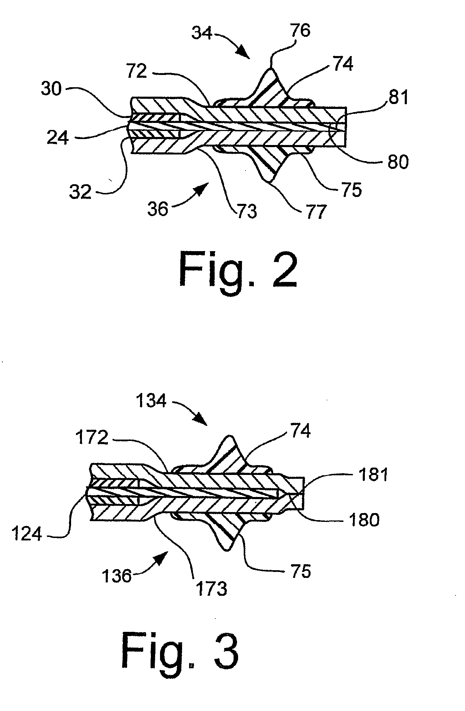

es sich bei Abb. 1 um eine schematische, perspektivische Explosionsskizze einer individuellen Zelle einer Brennstoffzellenanordnung vor dem Verschweißen der Dichtungsmanschetten,

bei Abb. 2 um einen Teilaufriss einer Dichtungsmanschetten-MEA-Einheit und

bei Abb. 3 um einen Teilaufriss ähnlich wie Abb. 2 handelt, der allerdings eine alternative Ausführungsform der vorliegenden Erfindung illustriert.

### AUSFÜHRLICHE BESCHREIBUNG DER BEVORZUGTEN AUSFÜHRUNGSFORMEN

Die folgende Beschreibung der bevorzugten Ausführungsformen ist nur beispielhafter Natur und soll in keiner Weise die Erfindung bzw. ihre Anwendungen einschränken.

In Abb. 1 - 2 ist eine individuelle Zelle **20** zur Verwendung in einer Brennstoffzellenanordnung dargestellt. Die individuelle Zelle **20** enthält vorzugsweise eine Dichtungsmanschetten-Membran-Elektroden-Einheit (MEA) **22** (falls gewünscht, kann die Dichtungsmanschette aber separat anstatt Teil der Einheit sein). Die MEA **22** besteht aus einer Membran **24**, mit je einer Schicht Katalysatormaterial **26** auf beiden Seiten der Membran **24**. Weiterhin gehören zur MEA auf beiden Seiten der Katalysatormaterialschichten **26** eine erste Gasdiffusionsschicht (GDL, gas diffusion layer) **30** und eine zweite GDL **32** sowie eine erste Dichtungsmanschette **34** und eine zweite Dichtungsmanschette **36,** die um die Peripherien **41, 42** der ersten GDL **30** und der zweiten GDL **32** angebracht sind. Vorzugsweise sind die Dichtungsmanschetten **34, 36** an die GDLs **30, 32** angeklebt, aber wahlweise können auch andere Befestigungsmethoden wie das direkte Druckformen der Dichtungsmanschetten an die zugehörigen GDLs verwendet werden. Die GDLs **30, 32** und ihre zugehörigen Dichtungsmanschetten **34, 36** bilden zusammen jeweils eine Abdichtungs- und Diffusionseinheit **28, 29**. Um den Zusammenbau der individuellen Zelle **20** zu komplettieren, wird eine erste Trennplatte **38** mit der ersten Dichtungsmanschette **34** und der ersten GDL **30** verbunden und eine zweite Trennplatte **40** mit der zweiten Dichtungsmanschette **36** und der zweiten GDL **32.** Da die relative Stärke der einzelnen Komponenten sehr gering ist, sind Letztere zur leichteren Beschreibung der Erfindung in den Abbildungen nur schematisch dargestellt. Die tatsächlichen Dicken der Komponenten richten sich nach der jeweiligen speziellen Verwendung der Brennstoffzelle und sind Fachleuten bekannt. Außerdem sind die Komponenten der Zelle **20** in der Regel symmetrisch um die Membran **24** angeordnet.

Vorzugsweise handelt es sich bei Membran **24** um eine ionenleitende Polymerelektrolytenmembran wie sie in der Regel bei dieser Art der Brennstoffzellenverwendung zur Anwendung kommt. Beim Katalysatormaterial **26** handelt es sich vorzugsweise um Platin oder ein anderes, für eine typische Anwendung einer Brennstoffzelle vom Polymerelektrolytenmembrantyp geeignetes Katalysatormaterial. Erste und zweite GDL **30, 32** bestehen vorzugsweise aus Kohlefasern, können aber auch aus einem anderen gasdurchlässigen Material, das sich als Elektrode für eine Brennstoffzelle eignet, bestehen. MEA **22** kann aus einer Membran mit Katalysatormaterial und damit verbundenen GDLs oder aus einer Membran bestehen, die zwischen zwei GDLs mit Katalysatormaterial eingesetzt wird; beide Versionen sind der Fachwelt bekannt.

Bei den Dichtungsmanschetten **34, 36** handelt es sich vorzugsweise um laminierte Dichtungsmanschetten mit einem dünnen, flexiblen Träger **72, 73** auf den dauerhaft eine Elastomerdichtung **74** bzw. **75** angebracht ist - wobei beide Elastomerdichtungen **74, 75** vorzugsweise einen hervorstehenden Dichtungswulst **76, 77** besitzen. Beide Träger **72, 73** besitzen vorzugsweise eine Dicke von weniger als 1,0 Millimetern und werden vorzugsweise aus einem Polymersubstrat wie z. B. Polyimid oder Polyester hergestellt. Beide Elastomerdichtungen **74, 75** werden vorzugsweise direkt auf ihren Träger **72, 73** formgepresst, aber andere Verbindungstechniken können ebenfalls angewendet werden. Die Dichtungswulste **76, 77** sind dafür gedacht, gegen die Oberflächen der zugehörigen Trennplatten **38, 40** gepresst zu werden; dabei muss die Dichtungskraft ausreichend hoch sein, um das Austreten von Flüssigkeit durch die Dichtung und entlang der Oberflächen der entsprechenden Trennplatten **38, 40** zu verhindern. Die Dichtungswulste **76, 77** sind zwar in Form eines Dreiecks gezeigt, es können wahlweise aber auch andere Formen zur Anwendung kommen.

Die Membranen **24** reichen in der Regel bis zu Peripherie der Abdichtungs- und Diffusionseinheiten **28, 29.** Beim Zusammenbau der MEA-Einheiten **22** werden die Abdichtungs- und Diffusionseinheiten **28, 29** mit der Membran **24** gefluchtet und um diese herum zusammengeführt. Die Komponenten werden dann zusammengehalten, während die ersten Oberflächen **80, 81** der Dichtungsmanschetten **34** bzw. **36** mit der Membran **24** thermoverschweißt und abgedichtet werden. Alternativ können die Oberflächen **80, 81** mit Membran **24** auch vibrationsverschweißt und abgedichtet werden. Die MEA-Einheit **22** wird also am äußeren Rand zusammen gehalten und abgedichtet, ohne dass dafür ein Klebstoff verwendet wird. Im Anschluss an diesen Montageschritt wird durch Anbringen der Trennplatten **38, 40** die Zelle **20** komplettiert.

In Abb. 3 ist eine weitere Ausführungsform der Erfindung zu sehen. Für diese Ausführungsform erhalten ähnliche Elemente wie bei der ersten Ausführungsform eine ähnliche Nummer, aber als Hunderter-Serie. Bei dieser Ausführungsform reicht die Membran **24** nicht ganz bis zu Außenrand der Dichtungsmanschette **134, 136.** Stattdessen reicht sie nur ungefähr so weit wie die Elastomer-Dichtungen **74, 75.** Die Träger **172, 173** werden dann mit ihren ersten Oberflächen **180, 181** um den äußeren Rand der MEA-Einheiten zusammengebracht. Nach dem Ausrichten werden die Träger **172, 173** entweder thermo- oder vibrationsverschweißt, um die MEA-Einheiten peripher abzudichten und zu fixieren.

Die Beschreibung der Erfindung ist nur beispielhafter Natur und daher sind Variationen davon, die nicht wesentlich von der Erfindung abweichen, als durch die Erfindung abgedeckt anzusehen. Solche Variationen sind nicht als Abweichung vom Geist und Umfang der Erfindung anzusehen.

## Patentansprüche

**1.** Eine integrierte Dichtungsmanschetten-Membranelektroden-Einheit (MEA) für eine Brennstoffzelle, bestehend aus den folgenden Komponenten:
eine erste Dichtungsmanschette mit einer ersten Peripherie-Oberfläche sowie
eine Membran-Elektroden-Einheit (MEA) mit einer ersten Oberfläche, wobei ein Teil besagter erster Oberfläche mit der besagten ersten Peripherie-Oberfläche verbunden ist.

**2.** Die integrierte Dichtungsmanschetten-MEA-Einheit von Anspruch 1, **dadurch gekennzeichnet, dass** sich außerdem zwischen besagter erster Dichtungsmanschette und besagter MEA eine Gasdiffusionsschicht befindet.

**3.** Die integrierte Dichtungsmanschetten-MEA-Einheit von Anspruch 1, **dadurch gekennzeichnet, dass** außerdem auf besagter erster Dichtungsmanschette eine Dichtung dauerhaft angebracht ist.

**4.** Die integrierte Dichtungsmanschetten-MEA-Einheit von Anspruch 1, **dadurch gekennzeichnet, dass** sie außerdem eine zweite Dichtungsmanschette mit einer zweiten Peripherie-Oberfläche besitzt, wobei besagte zweite Oberfläche besagter MEA mit der zweiten Peripherie-Oberfläche verbunden ist.

**5.** Die integrierte Dichtungsmanschetten-MEA-Einheit von Anspruch 4, **dadurch gekennzeichnet, dass** sich zwischen besagter Dichtungsmanschette und besagter MEA noch eine Gasdiffusionsschicht befindet.

**6.** Die integrierte Dichtungsmanschetten-MEA-Einheit von Anspruch 4, **dadurch gekennzeichnet, dass** auf der zweiten Dichtungsmanschette noch eine Dichtung dauerhaft angebracht ist.

**7.** Die integrierte Dichtungsmanschetten-MEA-Einheit von Anspruch 1, **dadurch gekennzeichnet, dass** besagter Teil der besagten ersten Oberfläche mit besagter erster Peripherie-Oberfläche thermoverschweißt ist.

**8.** Die integrierte Dichtungsmanschetten-MEA-Einheit von Anspruch 1, **dadurch gekennzeichnet, dass** besagter Teil der besagten ersten Oberfläche mit besagter erster Peripherie-Oberfläche reibverschweißt ist.

**9.** Die integrierte Dichtungsmanschetten-MEA-Einheit von Anspruch 1, **dadurch gekennzeichnet, dass** besagter Teil der besagten ersten Oberfläche mit besagter erster Peripherie-Oberfläche vibrationsverschweißt ist.

**10.** Eine integrierte Dichtungsmanschetten-Membranelektroden-Einheit (MEA) für eine Brennstoffzelle, bestehend aus den folgenden Komponenten:
eine erste Dichtungsmanschette mit einer ersten Peripherie-Oberfläche
eine zweite Dichtungsmanschette mit einer zweiten Peripherie-Oberfläche, wobei Teile besagter erster und zweiter Peripherie-Oberflächen dauerhaft miteinander verbunden sind sowie
eine Membran-Elektroden-Einheit (MEA), die zwischen besagter erster Dichtungsmanschette und besagter zweiter Dichtungsmanschette angeordnet ist.

**11.** Die integrierte Dichtungsmanschetten-MEA-Einheit von Anspruch 10, **dadurch gekennzeichnet, dass** sich außerdem zwischen besagter erster Dichtungsmanschette und besagter MEA eine Gasdiffusionsschicht befindet.

**12.** Die integrierte Dichtungsmanschetten-MEA-Einheit von Anspruch 10, **dadurch gekennzeichnet, dass** sich außerdem zwischen besagter zweiter Dichtungsmanschette und besagter MEA eine Gasdiffusionsschicht befindet.

**13.** Die integrierte Dichtungsmanschetten-MEA-Einheit von Anspruch 10, **dadurch gekennzeichnet, dass** außerdem auf besagter erster Dichtungsmanschette eine Dichtung dauerhaft angebracht ist.

**14.** Die integrierte Dichtungsmanschetten-MEA-Einheit von Anspruch 10, **dadurch gekennzeichnet, dass** auf der zweiten Dichtungsmanschette noch eine Dichtung dauerhaft angebracht ist.

**15.** Die integrierte Dichtungsmanschetten-MEA-Einheit von Anspruch 10, **dadurch gekennzeichnet, dass** Teile besagter erster und zweiter Peripherie-Oberflächen thermoverschweißt sind.

**16.** Die integrierte Dichtungsmanschetten-MEA-Einheit von Anspruch 10, **dadurch gekennzeichnet, dass** Teile besagter erster und zweiter Peripherie-Oberflächen reibverschweißt sind.

**17.** Die integrierte Dichtungsmanschetten-MEA-Einheit von Anspruch 10, **dadurch gekennzeichnet, dass** Teile besagter erster und zweiter Peripherie-Oberflächen vibrationsverschweißt sind.

**18.** Eine Methode zum Zusammenbau von Brennstoffzellen, bestehend aus den folgenden Schritten:
Positionierung einer Membran-Elektroden-Einheit (MEA) zwischen eine erste und zweite Dichtungsmanschette und
dauerhafte Verbindung eines Teils einer ersten Oberfläche besagter MEA mit einer ersten Peripherie-Oberfläche besagter erster Dichtungsmanschette.

**19.** Die Methode von Anspruch 18, wobei besagter Schritt der Herstellung einer dauerhaften Verbindung im Thermoverschweißen besagten Teils der besagten ersten Oberfläche besagter MEA mit besagter erster Peripherie-Oberfläche besagter erster Dichtungsmanschette besteht.

**20.** Die Methode von Anspruch 18, wobei besagter Schritt der Herstellung einer dauerhaften Verbindung im Reibverschweißen besagten Teils der besagten ersten Oberfläche besagter MEA mit besagter erster Peripherie-Oberfläche besagter erster Dichtungsmanschette besteht.

**21.** Die Methode von Anspruch 18, wobei besagter Schritt der Herstellung einer dauerhaften Verbindung im Vibrationsverschweißen besagten Teils der besagten ersten Oberfläche besagter MEA mit besagter erster Peripherie-Oberfläche besagter erster Dichtungsmanschette besteht.

**22.** Die Methode von Anspruch 18, **dadurch gekennzeichnet, dass** außerdem ein Teil einer zweite Oberfläche besagter MEA mit einer zweiten Peripherie-Oberfläche von besagter zweiter Dichtungsmanschette dauerhaft verbunden wird.

**23.** Die Methode von Anspruch 22, wobei besagter Schritt der Herstellung einer dauerhaften Verbindung im Thermoverschweißen besagten Teils der besagten ersten Oberfläche besagter MEA mit besagter erster Peripherie-Oberfläche besagter erster Dichtungsmanschette besteht.

**24.** Die Methode von Anspruch 22, wobei besagter Schritt der Herstellung einer dauerhaften Verbindung im Reibverschweißen besagten Teils der besagten ersten Oberfläche besagter MEA mit besagter erster Peripherie-Oberfläche besagter erster Dichtungsmanschette besteht.

**25.** Die Methode von Anspruch 22, wobei besagter Schritt der Herstellung einer dauerhaften Verbindung im Vibrationsverschweißen besagten Teils der besagten ersten Oberfläche besagter MEA mit besagter erster Peripherie-Oberfläche besagter erster Dichtungsmanschette besteht.

**26.** Die Methode von Anspruch 18, **dadurch gekennzeichnet, dass** außerdem zwischen besagter MEA und besagter erster Dichtungsmanschette eine Gasdiffusionsschicht eingefügt wird.

**27.** Die Methode von Anspruch 18, **dadurch gekennzeichnet, dass** außerdem zwischen besagter MEA und besagter zweiter Dichtungsmanschette eine Gasdiffusionsschicht eingefügt wird.

**29.** Eine Methode zum Zusammenbau von Brennstoffzellen, bestehend aus den folgenden Schritten:
Positionierung einer Membran-Elektroden-Einheit (MEA) zwischen eine erste und zweite Dichtungsmanschette und
dauerhafte Verbindung einer ersten Peripherie-Oberfläche besagter erster Dichtungsmanschette mit einer zweiten Peripherie-Oberfläche besagter zweiter Dichtungsmanschette.

**30.** Die Methode von Anspruch 29, wobei besagter Schritt der Herstellung einer dauerhaften Verbindung im Thermoverschweißen der besagten ersten Peripherie-Oberfläche mit der besagten zweiten Peripherie-Oberfläche besteht.

**31.** Die Methode von Anspruch 29, wobei besagter Schritt der Herstellung einer dauerhaften Verbindung im Reibverschweißen der besagten ersten Peripherie-Oberfläche mit der besagten zweiten Peripherie-Oberfläche besteht.

**32.** Die Methode von Anspruch 29, wobei besagter Schritt der Herstellung einer dauerhaften Verbindung im Vibrationsverschweißen der besagten ersten Peripherie-Oberfläche mit der besagten zweiten Peripherie-Oberfläche besteht.

**33.** Die Methode von Anspruch 29, **dadurch gekennzeichnet, dass** außerdem zwischen besagter MEA und besagter erster Dichtungsmanschette eine Gasdiffusionsschicht eingefügt wird.

**34.** Die Methode von Anspruch 29, **dadurch gekennzeichnet, dass** außerdem zwischen besagter MEA und besagter zweiter Dichtungsmanschette eine Gasdiffusionsschicht eingefügt wird.
